# EUROPEAN PATENT APPLICATION

(11) **EP 1 010 547 A2**
(43) Date of publication of application: **21.06.2000**
(21) Application number: 99124042.5
(22) Date of filing: 09.12.1999
(51) Int. Cl.: B60C 9/00, B60C 9/20, D07B 1/06

(54) **Pneumatic radial tire**

(30) Priority: 11.12.1998 JP 35328198
(71) Applicant: THE YOKOHAMA RUBBER CO., LTD., Tokyo, 105 (JP)
(72) Inventor: Imamiya, Susumu, c/o The Yokohama Rubber Co., Ltd., Hiratsuka-shi, Kanagawa-ken (JP)
(74) Representative: HOFFMANN - EITLE

(57) **Abstract**

A pneumatic radial tire having a belt layer comprising a steel cord is disclosed. The steel cord is constructed as follows: (a) a 1+N structure is provided, where sheath filaments amounting to N in number are stranded up around a spirally-reformed core filament in a cord longitudinal direction; (b) a shape of a cord cross section is flat; (c) an open structure is provided, where a gap is formed between adjacent filaments of the sheath filaments in the cord cross section; (d) the core filament is caused to bite between the adjacent filaments; (e) a spiral direction of the core filament is identical to a stranding direction of the sheath filaments; and (f) a major axial direction of a flat surface of the cord cross section is set along a facial direction of the belt layer.

## Description

### BACKGROUND OF THE INVENTION

The present invention relates to a pneumatic radial tire, which has a belt layer comprising a steel cord. More specifically, the invention relates to a pneumatic radial tire capable of increasing ride comfort and steering stability, and reducing weight much more.

Problems inherent in the pneumatic radial tire having a belt layer comprising a steel cord were easy rusting of the steel cord and bad ride comfort caused by high stiffness thereof. In order to solve these problems, a pneumatic radial tire was disclosed in Japanese Patent Laid-Open Hei 8 (1996)-325962. In this case, in order to prevent the generation of rust by increasing rubber permeability into a steel cord, the steel cord is formed in an open 1+N structure, where sheath filaments amounting to N in number are stranded up around a core filament made by spirally reforming the steel cord in a cord longitudinal direction. Also, in order to improve ride comfort, a cross section of the steel cord is formed in a flat structure.

In this steel cord, the filaments are separated from each other, and rubber enters a gap formed therebetween. If a belt layer comprises such a steel cord, moisture entering from a cut on a tread surface is prevented from entering the inside of the steel cord. Accordingly, cord corrosion can be prevented.

Furthermore, the flat cross section of the steel cord reduces out-of-plane stiffness of the belt layer, and increases in-plane stiffness. Accordingly, ride comfort and steering stability can be increased more compared with the case of using a steel cord formed to be completely round in cross section. However, since the three-layer cross sectional structure was employed, where the sheath filaments were wound on the outside of the core filament, there was a limit to thinning of a thickness of the cord in a flat shape, and further improvements in ride comfort and driving stability were not expected. In addition, since only the plurality of sheath filaments were stranded up on the outer circumference of the spiral core filament so as to surround the same, shape stability in the cord longitudinal direction was not secured, and a reduction sometimes occurred in uniformity of a tire manufactured by using the steel cord for the belt layer.

### SUMMARY OF THE INVENTION

It is an object of the present invention to provide a pneumatic radial tire capable of increasing ride comfort and steering stability by forming a steel cord used for a belt layer to be hyper-flat, and reducing a weight much more.

In order to achieve the foregoing object, according to the present invention, a pneumatic radial tire which has a belt layer comprising a steel cord in a tread section. In this case, the steel cord is constructed as follows: (a) a 1+N structure is provided, where sheath filaments amounting to N in number are stranded up around a spirally-reformed core filament in a cord longitudinal direction; (b) a shape of a cord cross section is flat; (c) an open structure is provided, where a gap is formed between adjacent filaments of the sheath filaments in the cord cross section; (d) the core filament is caused to bite between the adjacent filaments; (e) a spiral direction of the core filament is identical to a stranding direction of the sheath filaments; and (f) a major axial direction of a flat surface of the cord cross section is set along a facial direction of the belt layer.

With the steel cord constructed in the above manner, i.e., biting between the adjacent filaments of the sheath filaments, a cross section of the steel cord is formed to have a double-layer structure and, compared with a three-layer structure of the cross section made by simply surrounding an outer periphery of the core filament with the sheath filaments, crushing of the steel cord to be flat in upper and lower directions is further facilitated. Accordingly, it is possible to provide a hyper-flat steel cord having a flatness ratio of 0.7 or lower, which has conventionally been considered impossible in a mass production on an industrial basis. Therefore, by setting a major axial direction of a flat surface of the steel cord cross section along a facial direction of the belt layer, a thickness of the belt layer can be thinned, and a tire weight can be reduced.

Regarding the belt layer, since the flat surface of the steel cord cross section is set along the facial direction of the belt layer, ride comfort can be increased by reducing out-of-plane stiffness of the belt layer (bending stiffness in a direction orthogonal to a surface of the belt layer). Also, steering stability can be increased by heightening an in-plane stiffness of the belt layer (bending stiffness in a width direction of the belt layer) so as to increase a cornering force. In this case, the cross section means a cord section perpendicular to the cord longitudinal direction.

Furthermore, because of biting of the core filament between the filaments of the sheath filaments, the sheath filaments receive a resisting force of the core filament with respect to a tensile strength of a longitudinal direction. Accordingly, a stranding shape of the sheath filaments can be stabilized in the longitudinal direction. This characteristic is effective for preventing the cord from being deformed by tensile stress applied in the cord longitudinal direction during tire forming or curing, maintaining a stable cord shape, and preventing deterioration of tire uniformity.

### BRIEF DESCRIPTION OF THE DRAWINGS:

Fig. 1 is a sectional view of main sections of a tire meridian direction, showing an example of a belt structure of a pneumatic radial tire of the present invention;
Fig. 2 is a cross sectional view of an example of a steel cord used for a belt layer of the pneumatic radial tire of the present invention;
Fig. 3 is a side view showing an example of a rubber reinforcing steel cord of the present invention; and
Fig. 4 is a view illustrating main sections taken out of Fig. 2.

### DESCRIPTION OF THE PREFERRED EMBODIMENTS

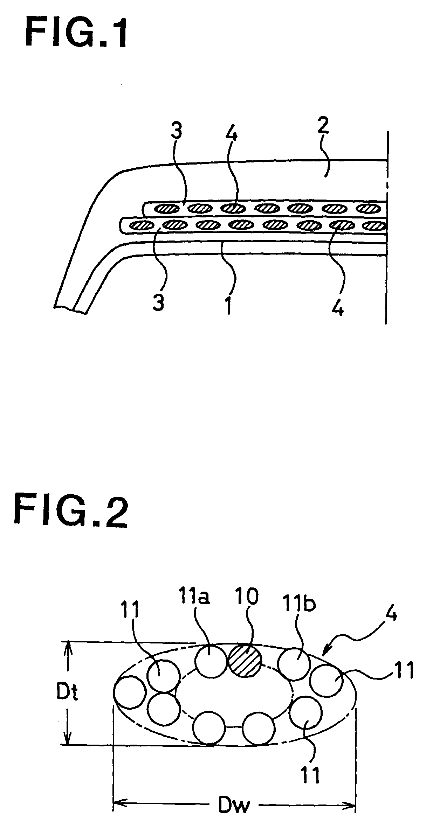

In accordance with an embodiment shown in Fig. 1, a pneumatic radial tire of the present invention is constructed in a manner that both ends of a carcass layer 1 are mounted on a pair of left and right bead sections and, in the outside of the carcass layer 1 in a tread section 2, two belt layers 3 and 3 are disposed in a tire circumferential direction by an amount equal to one round of a tire. Each of the two belt layers 3 and 3 is composed of a seat, which is formed by burying a plurality of steel cords 4 flat-shaped in section in rubber so as to set the major axial direction of the flat sections thereof along the facial direction of the belt layer. A cross sectional shape of each steel cord 4 is formed like that shown in Fig. 2.

As shown in Fig. 2, the steel cord 4 has a 1+N structure where sheath filaments 11 amounting to N in number are stranded up around a core filament 10 reformed spirally in a cord longitudinal direction. This 1+N structure is an open structure where a gap is formed between the filaments. A cross sectional shape of the cord is crushed to be flat. N may be 3 to 12.

Regarding the sheath filaments 11 amounting to N in number, a gap is formed at least in one place between adjacent filaments in the cord cross section, and the core filament 10 bites into this gap. By biting into the gap, the core filament 10 is substantially assimilated into the layer of the sheath filaments 11. Accordingly, the cross section of the steel cord becomes a double-layer structure, and a minor axial direction of the flat section is reduced. Thus, the steel cord can be hyper-flat.

A biting rate of the core filament 10 in the adjacent filaments 11a and 11b of the sheath filaments 11 is defined as follows.

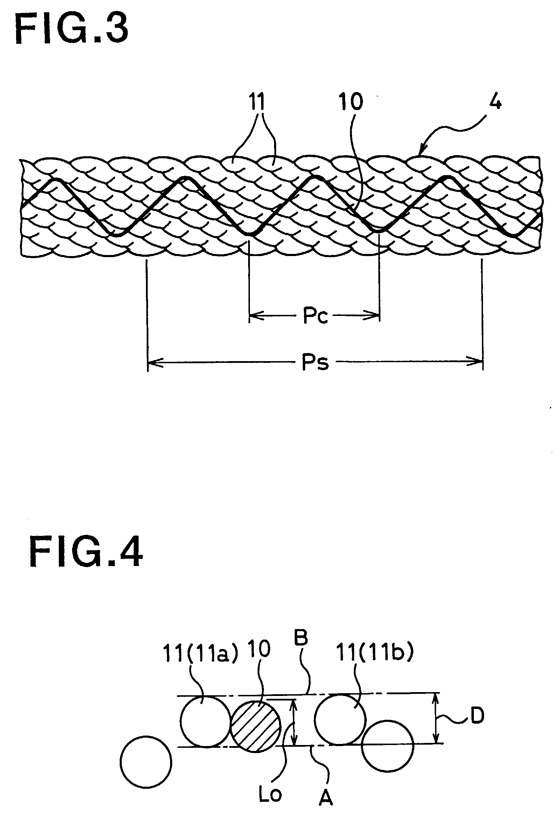

Specifically, according to the present invention, in expanded main parts of the cord shown in Fig. 4, "a biting rate" is defined by an expression (L₀/D)×100%: D representing a distance (equivalent to a diameter of the sheath filament 11) between an inner common tangential line A and an outer common tangential line B of the filaments 11a and 11b of the sheath filaments 11 located in both sides to sandwich the core filament, and L₀ representing a biting distance of the core filament 10 from the inner common tangential line.

With the steel cord having the above-described constitution used for the present invention, even if a flatness ratio (ratio of a minor axis to a major axis of a flat section) is set equal to 0.7 or lower, a cord shape can be stabilized with respect to a tensile strength by an anchor effect (engaging effect) of the core filament on the sheath filaments. Such a stabilizing effect of the cord shape causes core filament biting more easily as the number of sheath filaments is reduced in the 1+N structure. Biting becomes more difficult as the number thereof is increased. Thus, an optimal range of a biting rate should preferably be set as follows according to N.

Specifically, a steel cord of a specified length having peripheral rubber is sampled from the belt layer in the tire, and this cord is cut by 1cm at 50 places at equal intervals. For 50 cord sections thus obtained, an optimal range for the stabilizing effect of the cord shape is set in accordance with the proportion of presence of cord sections having specified or higher biting rates. In other words, if N is 3 to 4, a proportion of including cord sections having biting rates of 50% or higher should be set equal to 60% or higher (biting probability). If N is 5 to 8, a proportion of including cord sections having biting rates of 40% or higher should be set equal to 50% or higher (biting probability). If N is 9 to 12, a proportion of including cord sections having biting rates of 30% or higher should be set equal to 40% or higher (biting probability).

If the biting rates are lower than the above (i.e., a proportion of the cord sections is less than 60% in the case of N being 3 to 4, a proportion of the cord sections is less than 50% in the case of N being 5 to 8, and a proportion of the cord sections is less than 40% in the case of N being 9 to 12), substantial biting of the core filament 10 will never happen, and a cross section of the steel cord will be substantially identical to a three-layer structure. Consequently, hyper-flattening will become difficult. Investigation of the biting rate and the biting probability can be carried out by taking out a steel cord having peripheral rubber from the cured tire and then cutting the same.

In the steel cord filaments used for the present invention, a spiral direction of the core filament 10 is identical to a stranding direction of the sheath filaments 11. If these direction are opposite, then the core filament 10 and the sheath filaments will completely cross each other. Consequently, the core filament 10 will not bite between the adjacent sheath filaments 11a and 11b.

Also, as shown in Fig. 3, preferably, a spiral pitch P_{c} of the core filament 10 should be shorter than a stranding pitch Pₛ of the sheath filaments 11. More preferably, P_{c}/Pₛ which is a ratio of the spiral pitch P_{c} to the stranding pitch Pₛ should be set in a range of 0.12 to 0.5. By this relationship, biting of the core filament can be further improved.

Diameters of the core filament and the sheath filaments 11 should be set in a range of 0.15 to 0.35mm. If a diameter is lower than 0.15mm, then the filament will be too thin, and stiffness of the belt layer will be insufficient. Even wear resistance of the tread surface will probably be reduced. On the other hand, if a diameter exceeds 0.35mm, then a cord diameter will become excessively thick to increase a thickness of the belt layer. Even tire durability will probably be reduced. Diameters of the core filament 10 and the sheath filaments 11 may be set equal to or different from each other.

A flatness ratio Dₜ/D_{w} defined based on a ratio of a major axis D_{w} and a minor axis Dₜ in the cross section of the steel cord 4 may be set in a range of 0.25 to 0.70. If a flatness ratio is lower than 0.25, then over-flattening will cause excessive folding of the filament in both flat ends. Consequently, filament damage will be increased, and belt bending will be easier. On the other hand, if a flatness ratio exceeds 0.70, then this ratio can be obtained by a conventional structure other than that of the present invention. However, because of the high flatness ratio, it will be difficult to obtained ride comfort, steering stability, a weight reduction, and so on, achieved by the present invention in accordance with industrial standards.

The open structure of the steel cord 4 shown in Fig. 2 is an incomplete open structure, where the filaments are in contact with each other at least in one place in the cross section thereof, and not all the filaments are in contact with one another. However, the steel cord 4 used for the present invention should not be limited to such an incomplete open structure. An ideal structure is a complete open structure, where all the filaments are separated from one another in any places in the longitudinal direction thereof.

In accordance with a method for manufacturing the steel cord having the above-described features, first, a core filament spirally reformed in a cord longitudinal direction is prepared, and then sheath filaments amounting to N in number are loosely stranded up around the core filament by using the same as a guide. Subsequently, the cord is passed among several straitening rollers and crushed by a strong pressure to be flat. A flattening operation in this case needs a strong pressure so as to cause a part of the core filament to bite between the filaments of the sheath filaments.

For manufacturing a pneumatic radial tire by using the above-described steel cord, as shown in Fig. 1, major axial directions of the flat surfaces of the steel cords 4 should be set along respective facial directions of the belt layers 3 and 3. Because of such setting of the steel cords 4, the belt layers 3 and 3 can both be thinned. Accordingly, an out-of plane stiffness of the belt layer can be reduced, an in-plane stiffness can be increased, and ride comfort and steering stability can be increased.

### Embodiments, Conventional Example and Comparative Examples

The inventors manufactured pneumatic radial tires by employing the belt layer structure of the tire shown in Fig. 1 and setting a tire size to 195/65 R15 in common, and using steel cords different from one another as indicated by data in Tables 1 to 3 (embodiments 1 to 10, and conventional and comparative examples 1 to 8).

In this case, the conventional example uses the cord described in Japanese Patent Laid-Open Hei 8 (1996)-325962. This cord is similar to a cord of the embodiment 1 except for the fact that a core filament does not bite between the adjacent filaments of sheath filaments.

For these tires, the inventors evaluated ride comfort, steering stability, weight reductions and tire outer peripheral growths by a measuring method described below. The tire peripheral growth is equivalent to shape stability with respect to a tensile strength of the steel cord. The results of evaluation are shown in Tables 1 to 3.

### Ride Comfort:

Driving was performed on a test road surface having joints at a speed of 50km/h. Felt ride comfort is represented by an index while an index for the conventional example is 100. A larger index value means better ride comfort.

### Steering Stability:

The inventors measured cornering power (Cp) under the measuring conditions of an air pressure 200kPa, a load 4kN and a slip angle 1°.

Steering stability is represented by an index while an index for the conventional example is 100. A larger index value means larger Cp, and thus better steering stability.

### Weight Reduction:

The inventors measured a weight for one tire of a belt layer comprising a steel cord used for a belt section, and coating rubber for providing adhesion with the steel cord. A weight reduction is represented by an index while an index for the conventional example is 100. A larger index value means a better weight reduction.

### Tire Peripheral Growth:

The inventors evaluated the rising of a belt layer end in the following manner.

An increased amount in a dynamic loaded radius was measured in a drum test under the conditions of an air pressure 200kPA, a load 4kN and a speed 130km/h. A growth is represented by an index while an index for the conventional example is 100. A larger index value means a difficulty of separation, which limits a tire peripheral growth and increases durability of the belt section.

**Table 1**

| | Conventional example | Embodiment 1 | Embodiment 2 | Embodiment 3 | Comparative example 1 | Embodiment 4 |
|---|---|---|---|---|---|---|
| Cord structure | 1+8×0.20 | 1+8×0.20 | 1+8×0.20 | 1+8×0.20 | 1+8×020 | 1+8×0.20 |
| Biting probability * | 0 | 75 | 55 | 85 | 40 | 75 |
| Flatness ratio Dₜ/D_{w} | 0.50 | 0.50 | 0.50 | 0.50 | 0.50 | 0.35 |
| Core/sheath pitch ratio (P_{c}/Pₛ) | 0.25 | 0.25 | 0.25 | 0.25 | 0.25 | 0.25 |
| Rubber permeability | 100 (80%) | 125 (100%) | 113 (90%) | 125 (100%) | 113 (90%) | 125 (100%) |
| Belt bending durability | 100 | 150 | 120 | 110 | 105 | 145 |
| Ride comfort | 100 | 100 | 100 | 100 | 100 | 120 |
| Steering stability | 100 | 120 | 110 | 125 | 100 | 140 |
| Tire outer peripheral growth | 100 | 120 | 115 | 125 | 105 | 125 |
| Weight reduction | 100 | 100 | 100 | 100 | 100 | 120 |
| Workability | 100 | 200 | 140 | 210 | 110 | 200 |

| | | | | | | |
|---|---|---|---|---|---|---|
| * In the case of 1+8 structure: Appearance probability of section having biting rate of 40% or higher. | | | | | | |

**Table 2**

| | Comparative example 2 | Comparative example 3 | Embodiment 5 | Embodiment 6 | Embodiment 7 | Embodiment 8 | Comparative example 4 |
|---|---|---|---|---|---|---|---|
| Cord structure | 1+8×0.20 | 1+8×0.20 | 1+4×0.23 | 1+11×0.17 | 1+8×0.20 | 1+8×0.20 | 1+8×0.20 |
| Biting probability * | 75 | 75 | 90 | 60 | 75 | 75 | 75 |
| Flatness ratio Dₜ/D_{w} | 0.20 | 0.80 | 0.60 | 0.40 | 0.50 | 0.50 | 0.50 |
| Core/sheath pitch ratio (P_{c}/Pₛ) | 0.25 | 0.25 | 0.40 | 0.25 | 0.15 | 0.40 | 0.10 |
| Rubber permeability | 125 (100%) | 125 (100%) | 125 (100%) | 125 (100%) | 125 (100%) | 125 (100%) | 125 (100%) |
| Belt bending durability | 90 | 120 | 140 | 170 | 140 | 130 | 95 |
| Ride comfort | 140 | 95 | 95 | 120 | 100 | 100 | 100 |
| Steering stability | 150 | 110 | 125 | 120 | 120 | 120 | 115 |
| Tire outer peripheral growth | 120 | 115 | 120 | 120 | 115 | 110 | 105 |
| Weight reduction | 130 | 90 | 100 | 100 | 100 | 100 | 100 |
| Workability | 200 | 130 | 200 | 180 | 180 | 140 | 150 |

| | | | | | | | |
|---|---|---|---|---|---|---|---|
| * In the case of 1+4 structure: Appearance probability of section having biting rate of 50% or higher. * In the case of 1+11 structure: Appearance probability of section having biting rate of 30% or higher. | | | | | | | |

**Table 3**

| | Comparative example 5 | Embodiment 9 | Comparative example 6 | Comparative example 7 | Embodiment 10 |
|---|---|---|---|---|---|
| Cord structure | 1+8×0.20 | 1+4×0.30 | 1+11×0.12 | 1+4×0.40 | 1×0.25+8×0.20 |
| Biting probability * | 75 | 90 | 60 | 90 | 75 |
| Flatness ratio Dₜ/D_{w} | 0.50 | 0.50 | 0.5 | 0.5 | 0.5 |
| Core/sheath pitch ratio (P_{c}/Pₛ) | 0.60 | 0.4 | 0.25 | 0.4 | 0.25 |
| Rubber permeability | 100(80%) | 125 | 125 | 125 | 125 |
| Belt bending durability | 90 | 80 | 100 | 40 | 110 |
| Ride comfort | 100 | 80 | 130 | 80 | 100 |
| Steering stability | 110 | 90 | 120 | 100 | 100 |
| Tire outer Peripheral growth | 100 | 100 | 95 | 100 | 100 |
| Weight reduction | 100 | 100 | 105 | 90 | 100 |
| Workability | 120 | 100 | 90 | 100 | 100 |

| | | | | | |
|---|---|---|---|---|---|
| * Same as in the cases of Tables 1 and 2. | | | | | |

Biting probabilities in Tables 1 to 3 are defined as follows. Specifically, for the cord of a 1+4 structure (the embodiments 5 and 9, and the comparative example 7), there is a probability of presence of cord sections having biting rates of 50% or higher among cord cross sections obtained by cutting a steel cord having a specified length by 1cm in 50 places at equal intervals in a longitudinal direction. For the cord of a 1+8 structure (the embodiments 1 to 4, 7, 8 and 10, and the comparative examples 1 to 5), there is a probability of presence of sections having biting rates of 40% or higher among cord cross sections obtained by cutting a steel cord having a specified length by 1cm in 50 places at equal intervals in a longitudinal direction. For the cord of a 1+11 structure (the embodiment 6, and the comparative example 6), there is a probability of presence of sections having biting rates of 30% or higher among cord cross sections obtained by cutting a steel cord having a specified length by 1cm in 50 places at equal intervals in a longitudinal direction.

In Tables 1 to 3, the conventional example is a case where the core filament of the cord does not bite between the sheath filaments at all. The comparative example 1 is a case where a biting probability is too small. The comparative example 2 is a case where a flatness rate is too small. The comparative example 3 is a case where a flatness rate is too large. The comparative example 4 is a case where a core/sheath pitch ratio is too small. The comparative example 5 is a case where a core/sheath pitch ratio is too large. The comparative example 6 is a case where a filament diameter is too small. Workability is low during cord forming, and industrial production is difficult. The comparative example 7 is a case where a filament diameter is too large. Damage to the bead end during flat forming is large, and thus good durability is not provided.

Compared with the conventional example and the comparative examples 1 to 7, the tires of the present invention (the embodiments 1 to 10) are excellent in any one of ride comfort, steering stability, a weight reduction and a tire outer peripheral growth.

As described above, the pneumatic radial tire of the present invention has a belt layer comprising of a steel cord in a tread section. In this case, the steel cord is constructed as follows: (a) a 1+N structure is provided, where sheath filaments amounting to N in number are stranded-up around a spirally-reformed core filament in a cord longitudinal direction; (b) a shape of a cord cross section is flat; (c) an open structure is provided, where a gap is formed between the adjacent filaments of the sheath filaments in the cord cross section; (d) the core filament is caused to bite between the adjacent filaments; (e) a spiral direction of the core filament is identical to a stranding direction of the sheath filaments; and (f) a major axial direction of a flat surface of the cord cross section is set along a facial direction of the belt layer. Accordingly, ride comfort and steering stability can be increased, and a weight reduction can also be made.

## Claims

1. A pneumatic radial tire comprising:
a belt layer comprising a steel cord in a tread section,
wherein said steel cord is constructed as follows:
(a) a 1+N structure is provided, where sheath filaments amounting to N in number are stranded up around a spirally-reformed core filament in a cord longitudinal direction;
(b) a shape of a cord cross section is flat;
(c) an open structure is provided, where a gap is formed between adjacent filaments of the sheath filaments in the cord cross section;
(d) the core filament is caused to bite between the adjacent filaments;
(e) a spiral direction of the core filament is identical to a stranding direction of the sheath filaments; and
(f) a major axial direction of a flat surface of the cord cross section is set along a facial direction of the belt layer.

2. A pneumatic radial tire according to claim 1, wherein a flatness ratio defined by a ratio Dₜ/D_{w} of a major axis D_{w} and a minor axis Dₜ in the cord cross section is set in a range of 0.25 to 0.70.

3. A pneumatic radial tire according to claim 1, wherein each of diameters of said core filament and said sheath filaments is set in a range of 0.15 to 0.35 mm.

4. A pneumatic radial tire according to claim 1, wherein P_{c}/Pₛ =0.12 to 0.5 is set for a ratio of a spiral pitch P_{c} of said core filament to a stranding pitch Pₛ of said sheath filaments.

5. A pneumatic radial tire according to claim 1, wherein N is set in a range of 3 to 12.

6. A pneumatic radial tire according to claim 1, among cord cross sections obtained by cutting a steel cord taken out of the tire by 1cm in 50 places at equal intervals in a longitudinal direction while N is 3 to 4, a proportion of presence of cord cross sections having biting rates of ≧50% being set equal to 60%, alternatively higher, each biting rate being defined by a ratio of a biting distance of the core filament from an inner common tangential line between the adjacent filaments of the sheath filaments to a distance from the inner common tangential line between the filaments to an outer common tangential line.

7. A pneumatic radial tire according to claim 1, among cord cross sections obtained by cutting a steel cord taken out of the tire by 1cm in 50 places at equal intervals in a longitudinal direction while N is 5 to 8, a proportion of presence of cord cross sections having biting rates of ≧40% being set equal to 50%, alternatively higher, each biting rate being defined by a ratio of a biting distance of the core filament from an inner common tangential line between the adjacent filaments of the sheath filaments to a distance from the inner common tangential line between the filaments to an outer common tangential line.

8. A pneumatic radial tire according to claim 1, among cord cross sections obtained by cutting a steel cord taken out of the tire by 1cm in 50 places at equal intervals in a longitudinal direction while N is 9 to 12, a proportion of presence of cord cross sections having biting rates of ≧30% being set equal to 40%, alternatively higher, each biting rate being defined by a ratio of a biting distance of the core filament from an inner common tangential line between the adjacent filaments of the sheath filaments to a distance from the inner common tangential line between the filaments to an outer common tangential line.
